**Europäisches Patentamt**

(19) **European Patent Office**

**Office européen des brevets**

(11) Publication number: **0 219 549**
**B1**

(12) **EUROPEAN PATENT SPECIFICATION**

(45) Date of publication of patent specification: 26.09.90

(51) Int. Cl.⁵: **H 04 L 12/28**

(21) Application number: **86901486.0**

(22) Date of filing: **13.02.86**

(86) International application number:
**PCT/JP86/00062**

(87) International publication number:
**WO 86/05053 28.08.86 Gazette 86/19**

(54) **LOOP TRANSMISSION SYSTEM WITH FRAME SYNCHRONIZATION CONTROL.**

(30) Priority: 13.02.85 JP 25818/85
20.02.85 JP 31911/85
26.07.85 JP 163869/85

(43) Date of publication of application:
29.04.87 Bulletin 87/18

(45) Publication of the grant of the patent:
26.09.90 Bulletin 90/39

(84) Designated Contracting States:
DE FR GB NL

(56) References cited:
EP-A-0 060 307
US-A-4 468 734

IEEE Global Telecommunications Conference,
volume 1, 28 November - 1 December 1983
New-York, (US) H. Meyr et al.: "Synchronization
design criteria for a token ring", pages 13.4.1 -
13.4.9

(73) Proprietor: FUJITSU LIMITED
1015, Kamikodanaka Nakahara-ku
Kawasaki-shi Kanagawa 211 (JP)

(72) Inventor: FUKUDA, Haruki
6-11-19, Nishiooi
Shinagawa-ku Tokyo 140 (JP)
Inventor: TAZAKI, Kenshi
3-2-4, Chiyoda
Kashiwa-shi Chiba 277 (JP)
Inventor: MATSUDA, Masahiro
3-21-112-102, Yurigaoka Asao-ku
Kawasaki-shi Kanagawa 215 (JP)
Inventor: AWAZU, Tomohiko
Haitsu Fukumoto 301 629-56, Shimokodanaka
Nakahara-ku Kawasaki-shi, Kanagawa 211 (JP)

(74) Representative: Hoffmann, Klaus, Dr. rer. nat.
et al
Hoffmann . Eitle & Partner Patentanwälte
Postfach 81 04 20 Arabellastrasse 4
D-8000 München 81 (DE)

## Description

Technical Field

The present invention relates to a loop transmission system with frame synchronization control. The system according to the present invention is useful, for example, for frame synchronization control in which a frame synchronization cancellation signal is used for the control for taking-in or bypassing a node in a loop transmission line in a local area network (LAN) in association with computers distributed along the LAN.

Background Art

In general, in order to protect against errors in frame synchronization signals in a loop transmission system with frame synchronization control used, for example, for a LAN, the frame synchronization signals are monitored at regular intervals at which the frame synchronization signals are inherently expected to occur.

In this case, usually the synchronization state is maintained even if, for example, absence of the frame synchronization signal is detected once or so. Only after the absence of the frame synchronization signal has been detected a predetermined number of times is synchronization decided as lost and a new synchronization operation performed. Similarly, synchronization is not confirmed upon detection of receipt of a single frame synchronization signal, for example. Only after detection of the receipt of a predetermined number of the frame synchronization signals with predetermined timings is the frame synchronization decided as restored and the normal operation of reception and transmission of information enabled.

Assume that a supervisory device and a plurality of nodes are connected by a transmission loop to constitute a loop transmission system. The information transmitted through the transmission loop consists of a sequence of frames, each of the frames consisting of a frame header having frame synchronization signal (FP) and data.

Sometimes, a node in the transmission loop is bypassed because of a shutdown of the power source of the node in question. In this case, dummy data is produced in the supervisory device and the dummy data transmitted through the transmission loop.

When the node in question detects the dummy frame synchronization signal FP(D) in the frame header of the dummy data, the input portion and the output portion of the node in question are short-circuited so that the node in question in the loop transmission system is bypassed. In this case, the bypassing instruction is included in the frame header in addition to the synchronization signal.

Since the bypassing process is carried out at a timing within the duration of the dummy data, the length of transmission is reduced by the short-circuiting of the input portion and the output portion of the node in question. Hence, in appearance, a certain length of region is eliminated from the dummy data.

Due to this, there is a problem that, at the nodes downstream of the node in question, after the detection of a frame synchronization signal (FP), the next frame synchronization signal cannot be detected because of a timing error due to the reduction of length of the dummy data, so that the transmission and the reception of information in a number of frames from the frame subsequent to the frame synchronization signal in question are prevented until the restoration of synchronization by a synchronization operation. EP-A-60307 discloses a method for quickly restoring synchronous operation when a node is shut down or removed from the transmission loop by freezing phase locked loops in each node at their prior frequency. Furthermore, there is a problem that the nodes upstream of the node in question continue to transmit information regardless of the failure of synchronization until the failure of synchronization is acknowledged, while the nodes downstream of the node in question cannot receive such information transmitted from such upstream nodes.

Similarly, failure of synchronization can occur when a node is taken into the transmission loop.

When the taking-in of a node which has been bypassed to the transmission loop is informed from this node to the supervisory device, for example, by telephone, the supervisory device delivers dummy data. When the dummy frame synchronization signal FP(D) is detected by the node awaiting the taking-in, the short-circuit between the input portion and the output portion is released and the path from the input portion through the control portion to the output portion is inserted into the transmission loop. Hence, in appearance, a length of data corresponding to the inserted length of the transmission line is inserted into the length of the dummy data. Accordingly, there is a problem that the passage of the next frame synchronization signal (FP) at the node downstream of the node in question takes place after the elapse of a period longer than the frame period $(T_o)$ after the detection of the dummy frame synchronization signal FP(D), so that a failure of synchronization takes place and a number of the subsequent frames cannot be transmitted and received.

There is a problem that, when a delay phenomena occurs because of the start of a new operation of a device in a portion of the transmission loop or the bypassing of a device in a portion of the transmission loop, the failure of synchronization does not take place in the nodes upstream of the device in question but takes place in the node downstream the device in question. In such a case, the manner of control often becomes complicated because it is necessary to confirm from which timing the normal information transmission can be restarted.

## Disclosure of the Invention

It is an object of the present invention to provide an improved loop transmission system with frame synchronization control in which, taking-in of a node, bypassing of a node, taking-in of a sub-loop, or bypassing of a sub-loop, the duration of the interruption of transmission through the transmission loop is reduced and the loss of information from the information being transmitted is minimized accordingly.

According to the fundamental aspect of the present invention, there is provided a loop transmission system with frame synchronization control comprising:

loop means through which information in the form of a sequence of frames is transmitted,

a plurality of node means inserted at predetermined positions in said loop means for receiving and delivering information, the node means being in a synchronized operation state when a certain number greater than one of frame synchronization signals has been detected and being in a non-synchronized operation state when a certain number greater than one of asynchronizations has been detected, and

supervisory means inserted at a predetermined position in said loop means for supervising the transmission of information through said loop means in association with said node means.

Said supervisory means are operable to deliver a frame synchronization cancellation signal and

each of said node means are adapted to detect said frame synchronization cancellation signal and cancel the synchronized operation state, and to restore synchronization in the frame next to said synchronization cancelled frame;

whereby quick restoration of synchronization after bypassing or taking-in of a node is ensured.

In embodying the present invention it is possible to adopt any of the following conditions:

1. One of the node units executes bypassing or taking-in of node when the frame synchronization cancellation signal is detected.

2. The supervisory device includes a unit for delivering a synchronization cancellation signal.

3. At least one of the node units is installed in a sub-loop coupled with a main loop of the loop through a junction box circuit.

4. Bypassing of a node is carried out in the duration of a dummy frame signal.

5. The junction box circuit includes a unit for delivering a synchronization cancellation signal.

6. The supervisory device is operable to generate a dummy frame.

7. Each of the node units has a dummy frame detection portion.

8. The dummy frame is eliminated after one circulation of the dummy frame through the loop is completed.

9. The constitution of a frame signal is arranged such that a predetermined reception-only frame adapted to just receive information is provided after bypassing of a sub-loop occurs, and the reception-only frame is eliminated after one circulation of the reception-only frame through the loop is completed, so that the frame length of the frame signal is adjusted.

## Brief Description of the Drawings

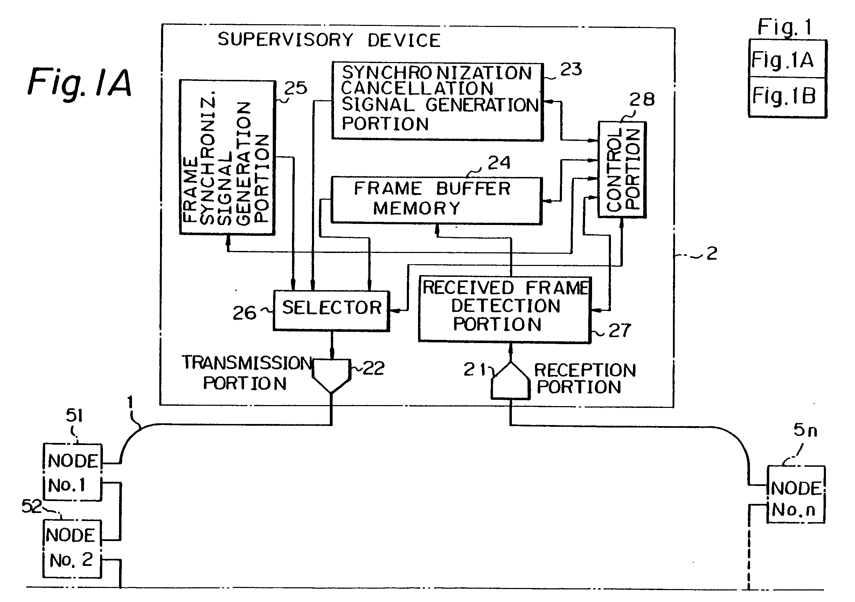

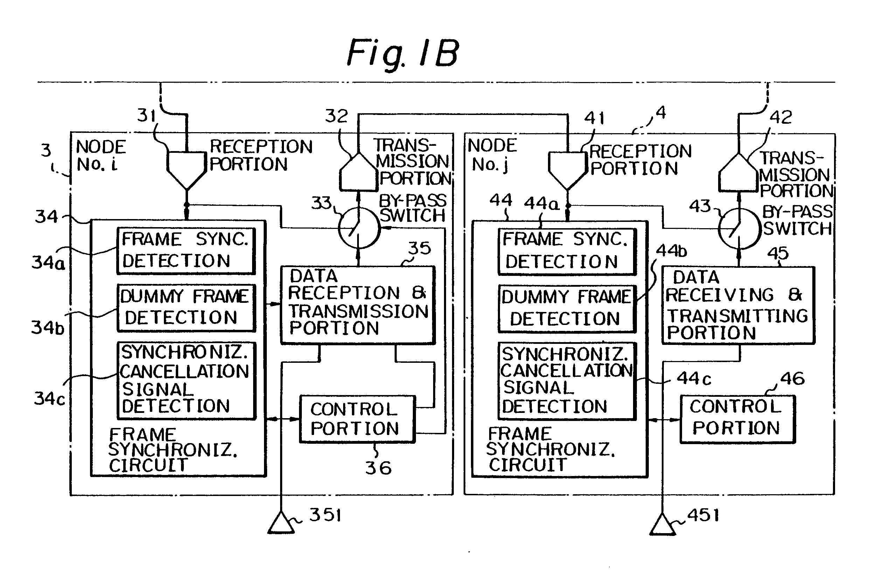

In the drawings, Figs. 1A and 1B are a schematic diagram of a loop transmission system with frame synchronization control according to an embodiment of the present invention;

Fig. 2 shows a frame pattern of the information used in the loop transmission system;

Fig. 3 shows a manner of transmission of the information along the transmission loop of the loop transmission system;

Figs. 4A and 4B show the structure of the frame synchronization circuit in a node in the loop transmission system of Figs. 1A and 1B;

Fig. 5 shows the waveforms of the signals appearing in the frame synchronization circuit;

Figs. 6A to 6G illustrate the operation of the loop transmission system of Figs. 1A and 1B;

Figs. 7, 8A, and 8B are flow charts of the operation of the loop transmission system of Figs. 1A and 1B;

Figs. 9A and 9B are a schematic diagram of a loop transmission system with frame synchronization control according to another embodiment of the present invention; and

Figs. 10A to 10H illustrate the operation of a loop transmission system with frame synchronization control according to a further embodiment of the present invention where the buffer amount of a buffer memory in a supervisory device in the loop transmission system is adjusted.

## Best Mode for Carrying Out the Invention

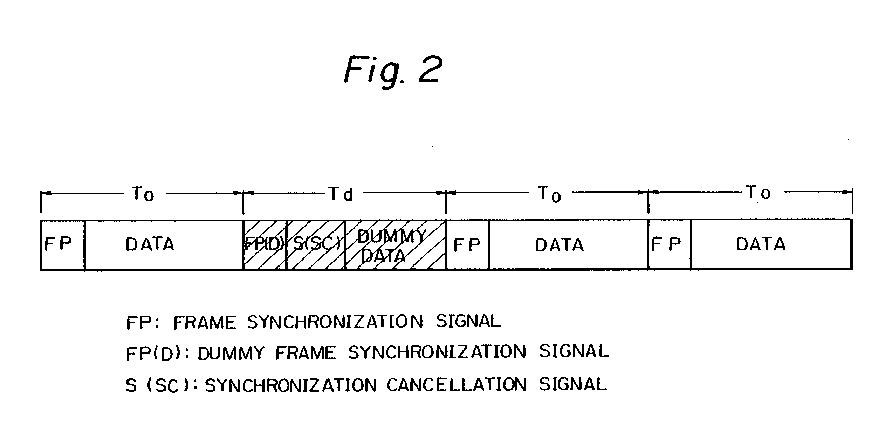

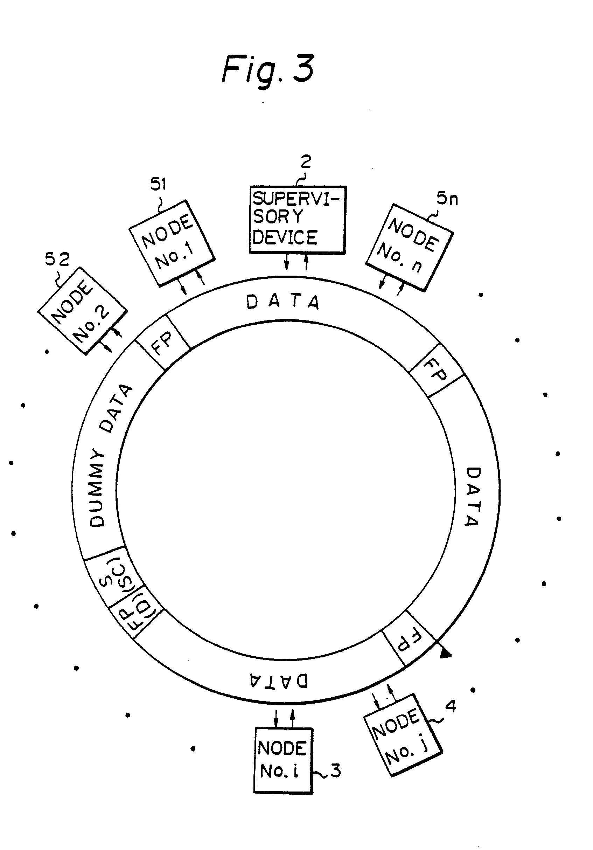

A loop transmission system with frame synchronization control according to an embodiment of the present invention is shown in Figs. 1A and 1B. The frame pattern of information in the system of Figs. 1A and 1B is shown in Fig. 2 and Fig. 3. The system of Figs. 1A and 1B includes a loop transmission line 1, a supervisory device 2, and a plurality of nodes No. 1, No. 2, ..., No. n which receive and transmit information. Among the nodes, node no. i is illustrated as node 3, and node no. j is illustrated as node 4.

The supervisory device 2 includes a synchronization cancellation signal generation portion 23, a frame buffer memory (FBM) 24, a reception portion 21, a transmission portion 22, a frame synchronization signal generation portion 25, a selector 26, a received frame detection portion 27, and a control portion 28.

The received frame detection portion 27 detects a frame synchronization signal FP or a dummy frame synchronization signal FP(D).

A dummy frame is delivered from the synchronization cancellation signal generation portion 23 when a node is to be bypassed. A dummy frame includes a dummy frame synchronization signal FP(D), a synchronization cancellation signal S(SC), and dummy data (Fig. 2). The dummy data is of a pattern which cannot easily be erroneously acknowledged as a frame synchronization signal.

The frame buffer memory (FBM) 24 is so operated that the transmission time of the transmission loop is made a whole multiple of the frame period $T_0$. The synchronization cancellation signal generation portion 23 generates a frame synchronization cancellation signal and a dummy frame.

Frame synchronization for information received after one circulation along the transmission loop 1 is maintained on the basis of the detection by the received frame detector 27. Information necessary for supervisory control is exchanged between the received frame detection portion 27 and the control portion 28. General data is written into the FBM 24. The frame synchronization signals are delivered periodically through the selector 26 from the frame synchronization signal generation portion 25. The data read from the FBM 24 is delivered through the selector 26 in coincidence with the period of the above-mentioned frame synchronization signal.

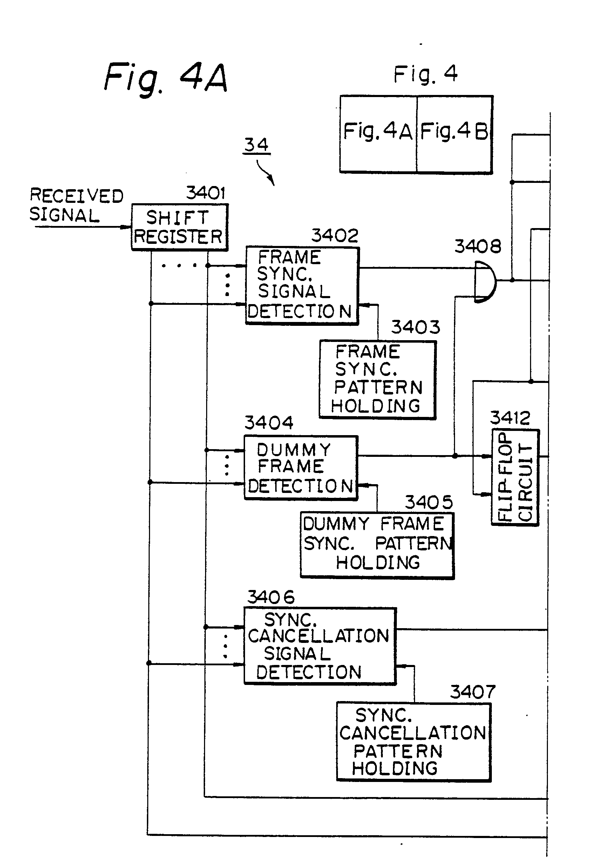

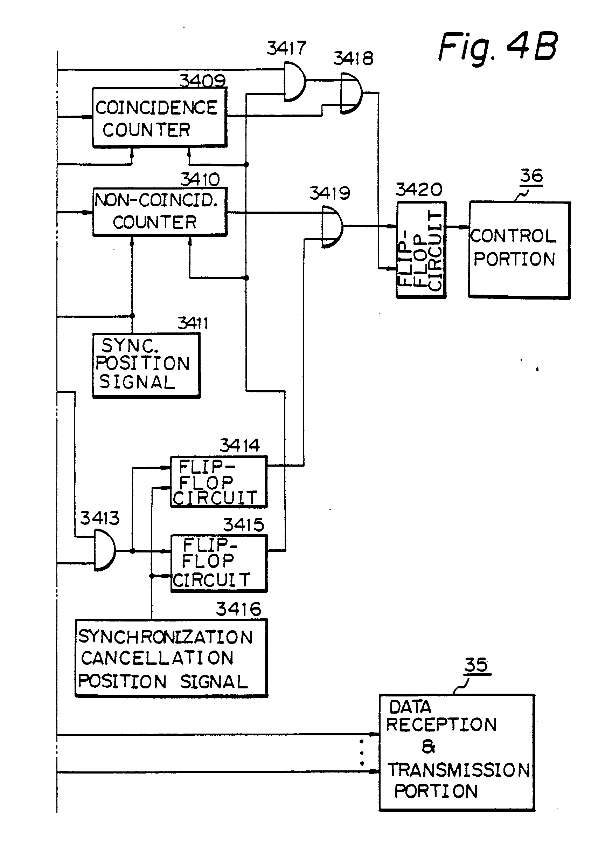

Node 3, which is a representative of nodes No. 1, No. 2, ..., No. n, includes a reception portion 31, a transmission portion 32, a bypassing switch 33, a frame synchronization circuit 34, a data reception and transmission portion 35, and a control portion 36. A terminal device 351 is connected with the data reception and transmission portion 35. The frame synchronization circuit 34 includes a frame synchronization signal detection element 34a, a dummy frame detection element 34b, and a synchronization cancellation signal detection element 34c. The structure of the frame synchronization circuit 34 will be later explained with reference to Figs. 4A and 4B.

When the movable contact of the bypassing switch 33 contacts the left-side fixed contact connected with the reception portion 31, the signal received by the reception portion 31 bypasses the node 3 through the bypassing route 31-33-32. In this case, the frame synchronization at node 3 is maintained by the operation of the frame synchronization circuit 34, and the node 3 awaits receipt of a synchronization cancellation signal. Thus, the node 3 is in a waiting state awaiting the taking-in to the transmission loop 1.

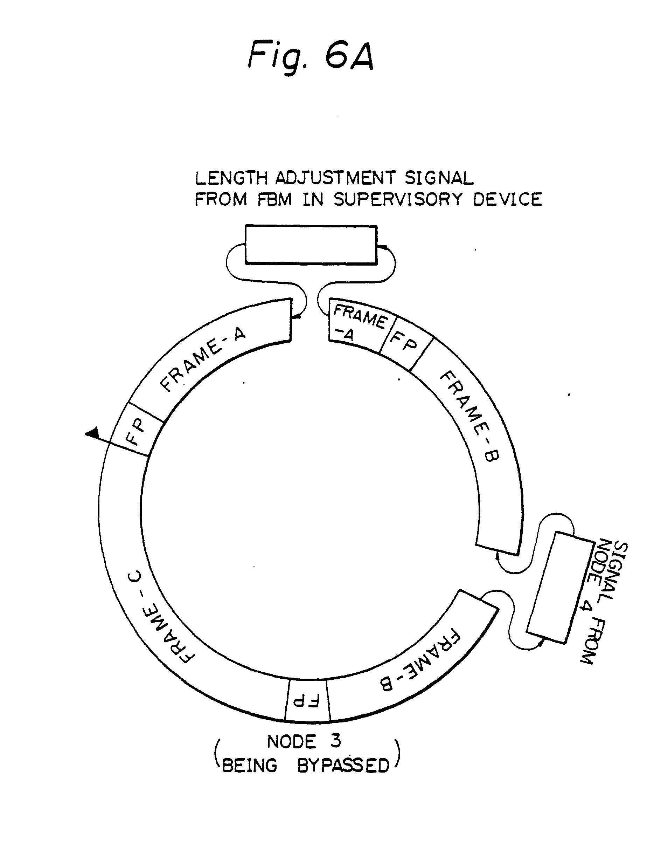

A manner of transmission of the information along the transmission loop 1 of the transmission system of Figs. 1A and 1B is illustrated in Fig. 3. In Fig. 3, the pattern of information is illustrated in a circle to represent the circulation of the information along a transmission loop, which can be expressed as a circle. The beginning of the information is marked by a triangle flag symbol. Outside the circle, the supervisory device 2 and a sequence of nodes No. 1, No. 2, ..., No. i, No. j, ..., No. n are arranged to represent the distribution of the supervisory device and nodes. The reception/transmission of information at the supervisory device or a node is carried out at the phase of the circular information pattern just in front of the supervisory device or a node in question. The illustration of Fig. 3 will provide the basis of the later illustration of Figs. 6A to 6G.

The structure of the frame synchronization circuit 34 in the node 3 in the loop transmission system of Figs. 1A and 1B is shown in Figs. 4A and 4B. The frame synchronization circuit 34 includes a shift register 3401, a frame synchronization signal detection portion 3402, a frame synchronization pattern holding portion 3403, a dummy frame detection portion 3404, a dummy frame synchronization pattern holding portion 3405, a synchronization cancellation signal detection portion 3406, and a synchronization cancellation pattern holding portion 3407.

The frame synchronization circuit 34 also includes an OR gate 3408, a coincidence counter 3409, a noncoincidence counter 3410, a synchronization position signal generation portion 3411, a flip-flop circuit 3412, an AND gate 3413, flip-flop circuits 3414 and 3415, a synchronization cancellation position signal generation portion 3416, an AND gate 3417, OR gates 3418 and 3419, and a flip-flop circuit 3420.

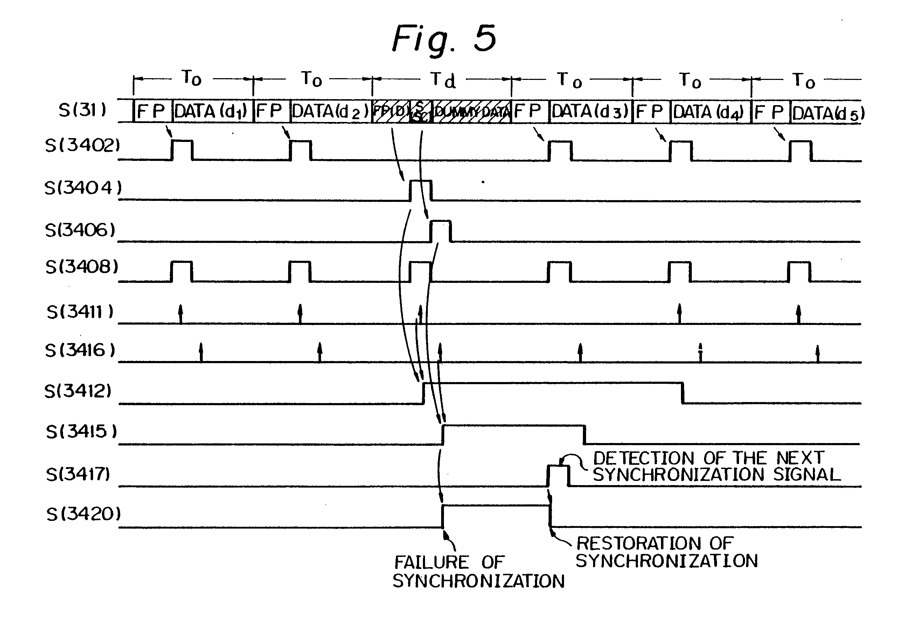

The operation of the frame synchronization circuit 34 will now be described with reference to Fig. 5, which shows the waveforms of the signals appearing in the portions of the frame synchronization circuit.

First, the normal operation is described.

In this case, the dummy frame does not exist. The frame signals consisting of the frame synchronization signal FP and the data $d_1$, $d_2$, ... are supplied successively to the shift register 3401. In the frame synchronization signal detection portion 3402, the signal from the shift register 3401 and the signal from the frame synchronization pattern holding portion 3403 are compared and the frame coincidence signal S (3402) is delivered as the detection of a frame synchronization signal FP. This frame coincidence signal S (3402) is transmitted through the OR gate 3408 to the coincidence counter 3409 and the non-coincidence counter 3410.

The counting of the synchronization signal S (3411) in the coincidence counter 3409 is carried out under the condition of existence of the coincidence signal S (3408), so that the number of applications of the coincidence signal S (3408) is counted in the coincidence counter 3409. The synchronization signal S (3411) in the non-coincidence counter 3410 is counted under the condition of absence of the coincidence signal S (3408), so that the number of non-coincidences, i.e., the number of asynchronizations, is counted in the non-coincidence counter 3410.

The coincidence signal S (3408) is also supplied to the AND gate 3417. The dummy frame coincidence signal S (3404) indicating the detection of the dummy frame synchronization signal FP(D) is not delivered from the dummy frame detection portion 3404. Hence the potential of the output signal S (3412) of the flip-flop circuit 3412 is LOW. Accordingly, the potential of the output S (3413) of the output S (3413) of the AND gate 3413 is LOW. The potential of the output of the flip-flop circuit 3415 is LOW. Accordingly, the potential of the output S (3417) of the AND gate 3417 is LOW. The signal of HIGH potential is delivered from the coincidence counter 3409 after the counting of a predetermined number of the coincidence signals S (3408) in the coincidence counter 3409. This signal is supplied to the OR gate 3418. Hence, the reset signal S (3418) is transmitted from the OR gate 3418 to the flip-flop circuit 3420, so that no output is delivered from the flip-flop circuit.

When failure of synchronization occurs, the frame coincidence signal S (3402) is not delivered from the frame synchronization signal detection portion 3402, so that the coincidence signal S (3408) is not delivered from the OR gate 3408. Hence, the signal of HIGH potential is delivered from the non-coincidence counter 3410 after the counting of a predetermined number of the synchronization position signals S (3411) in the non-coincidence counter 3410. Hence, the OR gate 3419 delivers the output signal which is supplied as the reset signal to the flip-flop circuit 3420. Accordingly, the potential of the frame a synchronization signal S (3420) which is delivered from the flip-flop circuit 3420 becomes HIGH.

When a dummy frame synchronization signal FP(D) is registered in the shift register 3401 on the basis of the supply of the dummy frame from the supervisory device 2, the signal from the shift register 3401 and the signal from the dummy frame synchronization pattern holding portion 3405 are compared in the dummy frame detection portion 3404, and the frame coincidence signal S (3404) indicating the detection of the dummy frame synchronization signal FP(D) is delivered from the dummy frame detection portion 3404. On the basis of this frame coincidence signal S (3404), the potential of the output S (3412) of the flip-flop circuit 3412 becomes HIGH.

When a synchronization cancellation signal is registered in the shift register 3401, the signal from the shift register 3401 and the signal from the synchronization cancellation pattern holding portion 3407 are compared in the synchronization cancellation signal detection portion 3406, and the potential of the coincidence signal S (3406) indicating the detection of the synchronization cancellation signal becomes HIGH.

Because of the HIGH potential of both the signal S (3406) and S (3412), the AND gate 3413 delivers the output of HIGH potential, so that the flip-flop circuits 3414 and 3415 are set. The output of the OR gate 3419 is supplied to the flip-flop circuit 3420 to set the flip-flop circuit 3420, on the basis of the output of the flip-flop circuit 3414. Hence, the potential of the frame asynchronization signal S (3420) becomes HIGH.

When a frame synchronization signal FP is transmitted next to the transmission of the dummy data, a frame coincidence signal S (3402) is delivered from the frame synchronization signal detection portion 3402, so that the potential of the coincidence signal S (3408) from the OR gate 3408 becomes HIGH. The potential of the output S (3415) of the flip-flop circuit 3415 is HIGH. The potential of the output S (3417) of the AND gate 3417 becomes HIGH when the potential of the coincidence signal S (3408) becomes HIGH, so that the signal S (3417) is supplied as the reset signal to the OR gate. The signal S (3418) from the OR gate 3418 resets the flip-flop circuit 3420, so that the potential of the frame asynchronization signal S (3420) becomes LOW to realize the normal operation. The potential of the signal S (3412) from the flip-flop circuit 3412 is kept HIGH until the next synchronization position signal S (3411) is transmitted. However, no erroneous operation takes place, since the normal position under a new synchronization state is indicated by the synchronization cancellation position signal S (3416).

Second, the operation of the taking-in of a node is described.

General data is received by the reception portion 21 of the supervisory device 2. The received general data is written into the FBM 24. The data read from the FBM 24 is delivered through the transmission portion 22.

The taking-in of the node 3 is instructed by an operator at the node 3 by, for example, switching on a power source in the node 3.

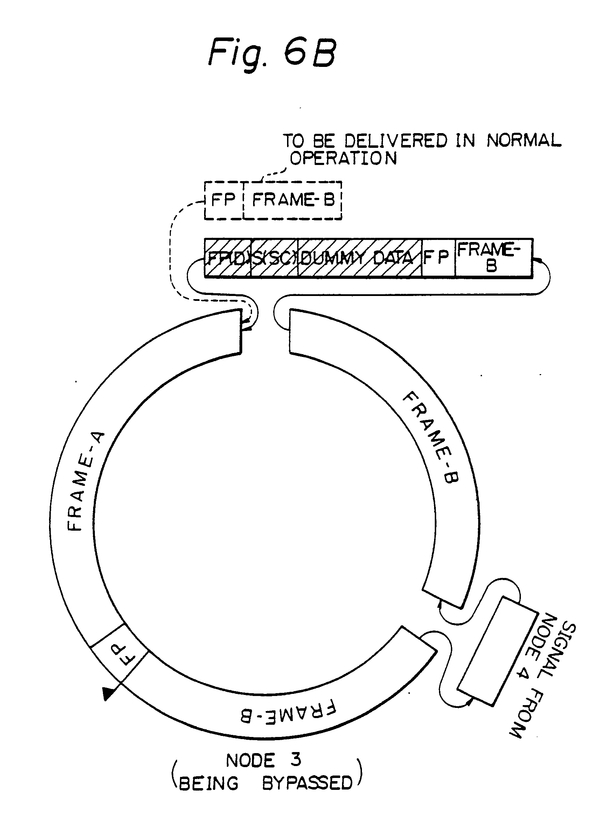

The control portion 28 carried out the data transmission stoppage control for the FBM 24 to cause the synchronization cancellation signal generation portion 23 to deliver a frame synchronization cancellation signal, when the frame synchronization signal FP at the beginning of the frame in question is positioned at the transmission end of the FBM 24. Hence, the synchronization cancellation signal generation portion 23 delivers a dummy frame synchronization signal FP(D), a synchronization cancellation signal S(SC), and dummy data (Fig. 6B). It is not necessary to make the length of the dummy frame consisting of the above-mentioned FP(D), S(SC), and the dummy data the same as the length of the frame signal. The length of the dummy frame may be shorter than the length of the frame signal.

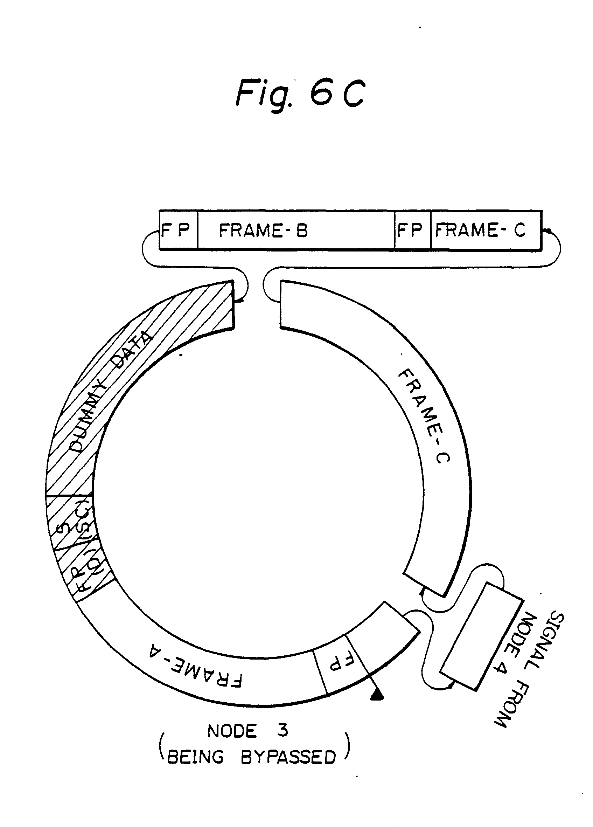

While the dummy frame is being delivered, the frame B and the frame C are stored in the FBM 24 successively. The control portion 28 delivers the frame B and frame C read from the FBM 24 successively after the dummy frame. Thus, the dummy frame is inserted in the transmission loop (Fig. 6C).

When the node No. 1 (51) receives the synchronization cancellation signal, reception and the transmission of the data during the dummy frame are stopped and the synchronization is cancelled to await receipt of the next synchronization signal FP. The reception and the transmission of the data at the node No. 1 (51) are restarted in synchronization with the above-mentioned next synchronization signal FP.

Similar operations are carried out at the node No. 2, No. 3, and so on.

When the frame synchronization circuit 34 in the node 3 detects the synchronization cancellation signal of the dummy frame, an asynchronization signal S (3420) is delivered (Fig. 5). The delivery of this synchronization signal is informed to the control portion 36, so that the node bypassing switch 33 is switched from the bypassing side to the side of the data reception and transmission portion 35. When the switching is carried out after the synchronization cancellation signal is detected, the synchronization cancellation signal has been supplied through the bypass switch 33 to the next node.

Due to the switching of the node bypass switch 33, the dummy frame is transmitted through the data reception and transmission portion 35. Hence, there occurs a delay until all of the dummy frame again reaches the node bypass switch 33. Accordingly, it is necessary to ensure the data during such delay.

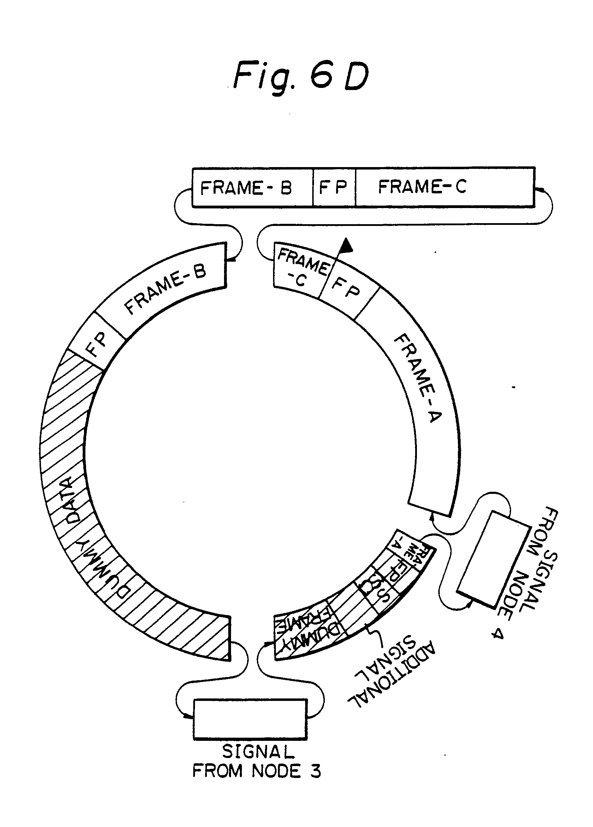

For this purpose, the frame synchronization circuit 34 delivers through the bypass passage the signal on the transmission loop by the time of detection of the synchronization cancellation signal. The signal during the dummy frame, i.e., the signal equivalent to the dummy data, is delivered from a dummy data delivery portion to supply the data reception and transmission portion with the delivered signal (Fig. 6D). Here, the "signal equivalent to the dummy data" is a signal which is the same as the dummy data or a signal by which erroneous operations in the downstream nodes do not occur.

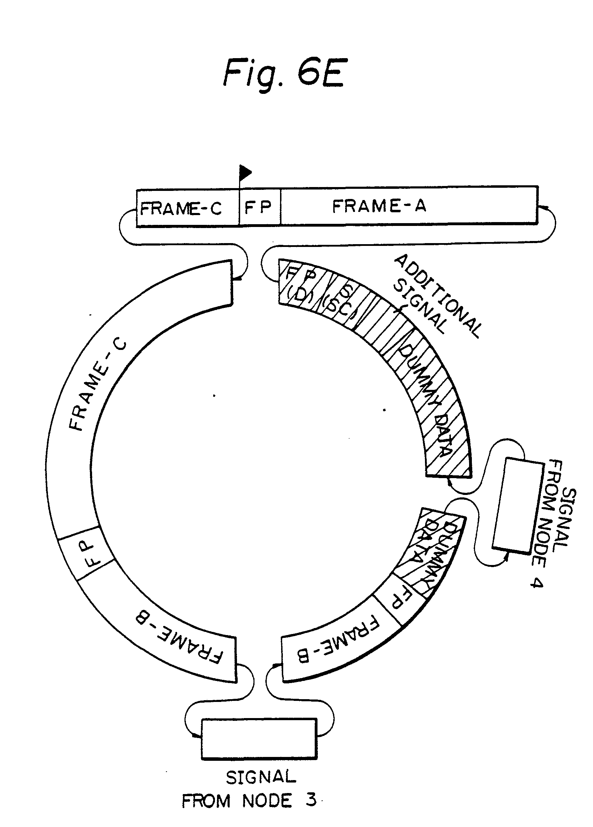

When the next frame synchronization signal is received by the frame synchronization circuit 34 of the node 3, the node 3 detects the receipt of the next frame synchronization signal and the synchronizing operation is carried out, so that the taking-in of the node 3 is achieved (Fig. 6E).

When the node 4 (node No. j), which is downstream of the node 3, detects the synchronization cancellation signal in the dummy frame, the reception and transmission of data are stopped in the node 4 as in the case of the node No. 1, node No. 2, and so on, and the reception of the next frame synchronization signal FP is awaited in the node 4. The time length at the node 4 up to the next frame synchronization signal FP with regard to the dummy frame is different from that at the upstream node No. 1 or node No. 2 because of the insertion of dummy data for taking-in of the node 3. The node 4 awaits to receive the frame synchronization signal, regardless of such difference in the time length.

Following the above-described processes through the nodes, the frame having the synchronization cancellation signal and the dummy data returns to the supervisory device 2 (Fig. 6E).

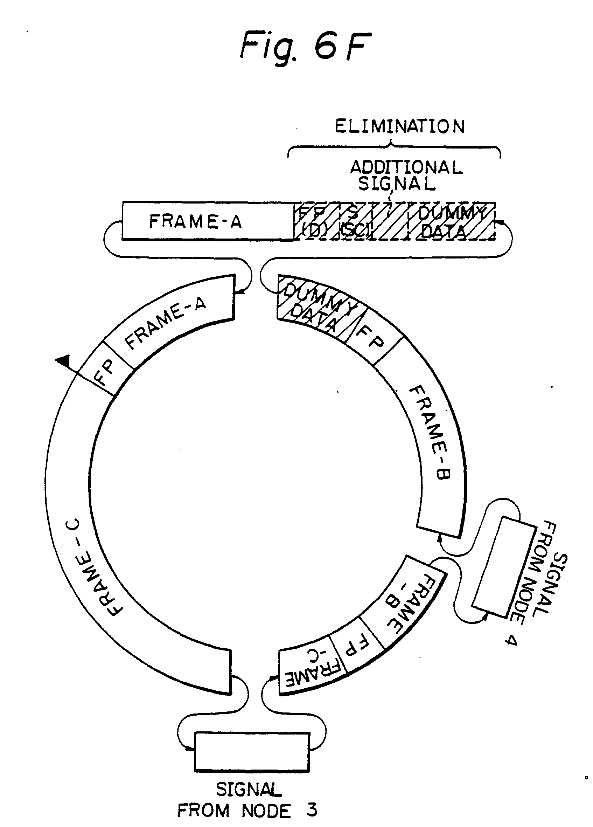

When the return of the dummy frame is acknowledged by the detection of the dummy frame synchronization signal and the synchronization cancellation signal by the received frame detection portion 27, the elimination of the dummy frame beginning with the dummy frame synchronization signal is carried out. The elimination of the dummy frame, without writing of data into the FBM 24, is continued until the next frame synchronization signal is detected (Fig. 6F).

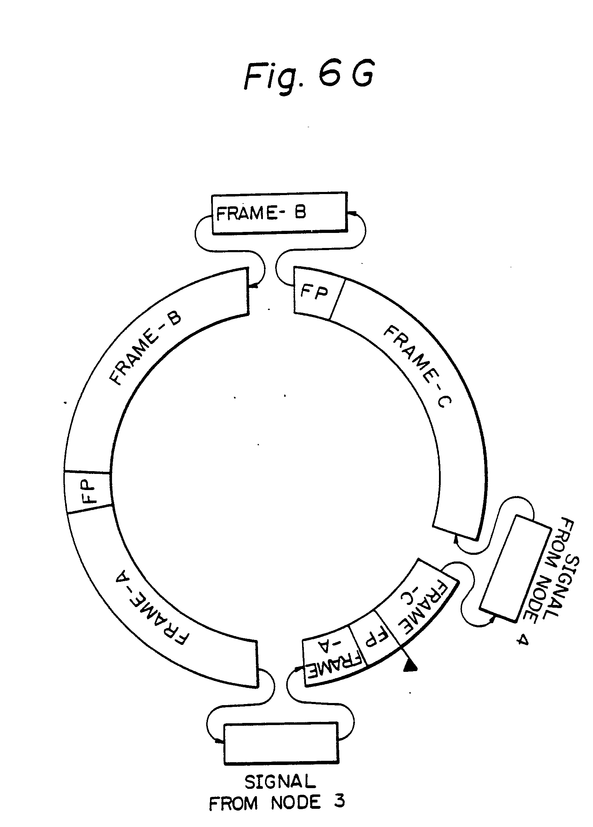

When the receipt of the next frame synchronization signal FP is detected by the received frame detection portion 27, the normal operation state is restored, and the writing of the received signal into the FBM 24 is restarted (Fig. 6G). After the elimination of the received dummy frame, the buffer amount of the FBM 24 returns to the usual buffer amount of the initial buffer amount plus/minus increase/decrease of delay due to, for example, the bypass cancellation, increase of delay, bypass setting, or decrease of delay.

Third, regarding the operation of bypassing of a node, a similar explanation applies as with the operation of taking-in of a node.

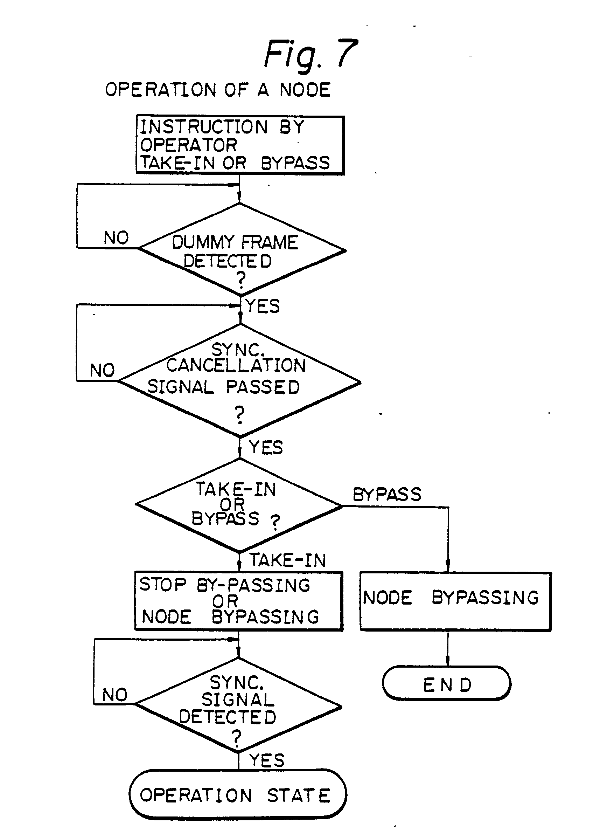

The operation of a node is described with reference to the flow chart of Fig. 7. In the processes expressed in the flow chart of Fig. 7, an instruction of taking-in or bypassing is given by an operator (S11). The decisions whether a dummy frame is detected, whether a synchronization cancellation signal is passed, and which of the taking-in or the bypassing is taking place are carried out (S12, S13, S14).

When the result of the last decision is "taking-in", stoppage of the bypassing or the node bypassing is carried out (S15). Then, the decision whether the synchronization signal is detected is carried out (S16). When this decision is YES, the process proceeds to the operation state.

When the result of the above-mentioned decision as to which of the taking-in or the bypassing is taking place is "bypassing", the node bypassing is carried out to proceed to the end of the process (S17).

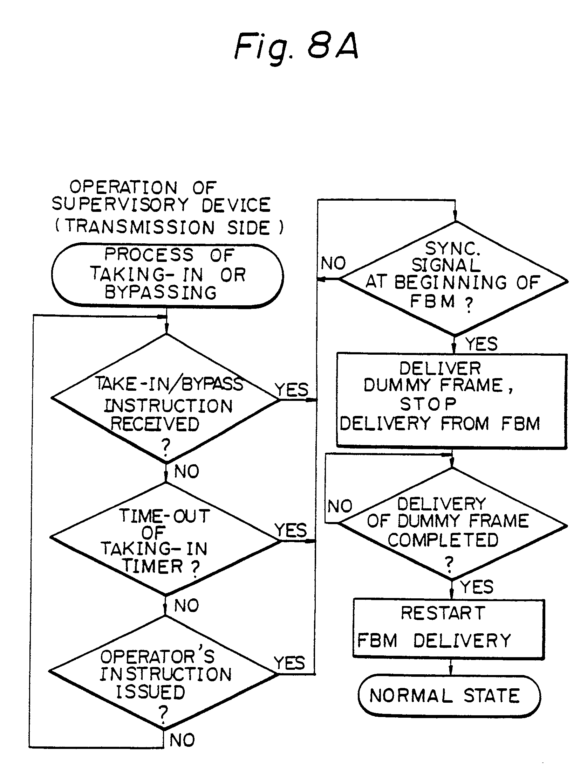

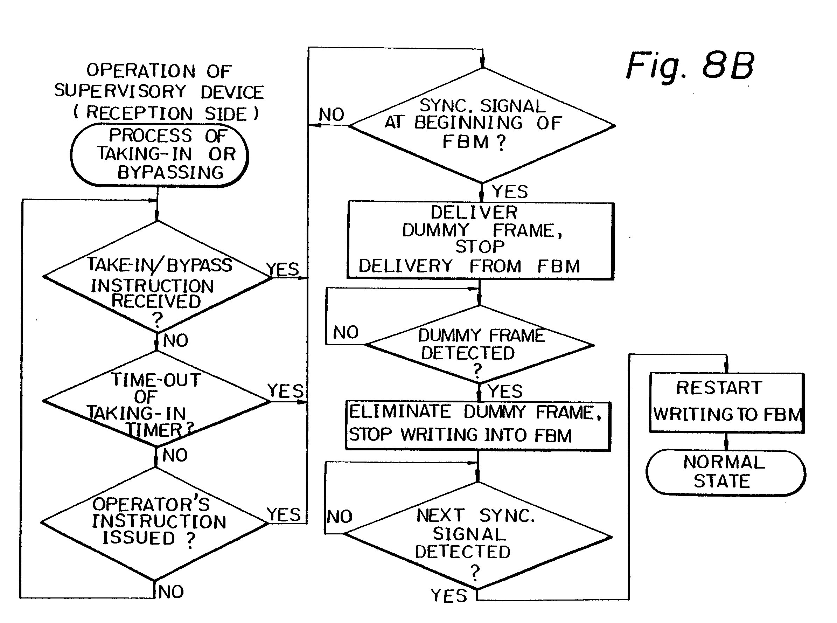

The operation of the supervisory device 2 regarding the transmitter side is illustrated in the flow chart of Fig. 8A. The operation of the supervisory device 2 regarding the receiver side is illustrated in the flow chart of Fig. 8B.

In the flow chart of Fig. 8A, the processes of taking-in or bypassing at the side of the transmitting portion are expressed. On the basis of an affirmative result of the decisions concerning whether the taking-in or bypassing instruction is received, whether the taking-in timer is in the state and whether the operator's instruction is issued (S21, S22, S23), the process proceeds to the decision whether a synchronization signal exists at the beginning of the FBM (S24). When the result of this decision is affirmative, a dummy frame is delivered and the delivery of data from the FBM is stopped (S25). Then, the decision whether the delivery of the dummy frame is completed is carried out (S26). When the result of this decision is affirmative, the delivery of data from the FBM is restarted (S27), and the process proceeds to the normal state.

In the flow chart of Fig. 8B, the processes up to the process of the delivery of a dummy frame and the stoppage of the delivery of data from the FBM are the same as in the case of Fig. 8A (S31, S32, S33, S34, S35). After that, the decision whether or not the dummy frame is detected is carried out (S36). When the result of this decision is affirmative, the dummy frame is eliminated and the writing of data into the FBM is stopped (S37), and the decision whether the next synchronization signal is detected is carried out (S38). When the result of this decision is affirmative, the writing of data into the FBM is restarted, and the process proceeds to the normal state (S39).

In the system of Figs. 1A and 1B, the buffer amount of the FBM can be selected as the necessary buffer amount, taking the maximum amount of data, with some allowance for fluctuation into consideration. Regarding the length of the dummy frame, the length can be selected as different from the length of the regular frame. Regarding the type of the loop, it is possible to use a double loop type transmission loop instead of the single loop type transmission loop described above. Regarding the delivery of the dummy frame, deliveries at a predetermined interval, for example, once per each frame or once per n frames, of the dummy frame with a synchronization cancellation signal can be adopted, instead of deliveries of dummy frames along with need, as in the above-described case. In this alternative case, the instructions of the setting and cancellation of the bypassing need not be controlled by the supervisory device.

Regarding the cause of variation of the delay, the variation can be caused by operations other than the bypassing and the bypass cancellation of a node in the case described above, for example, an additional provision of nodes.

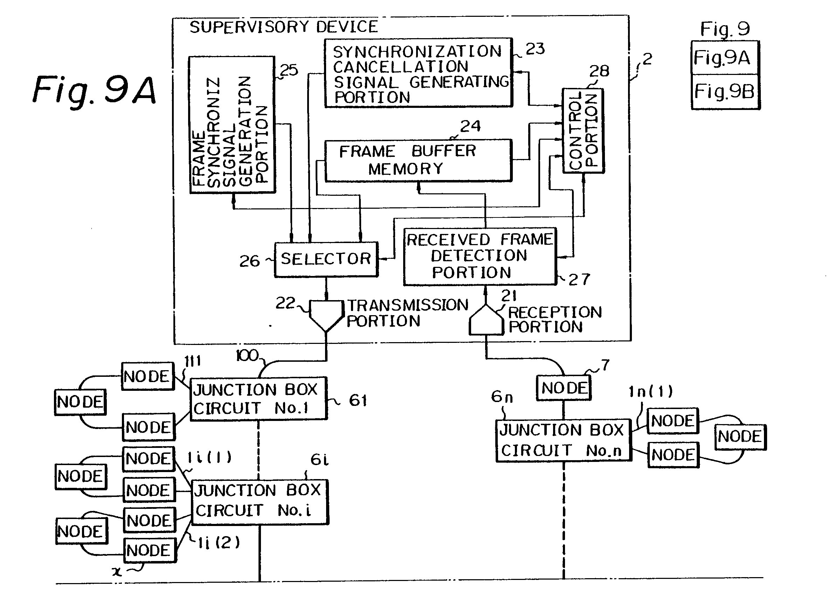

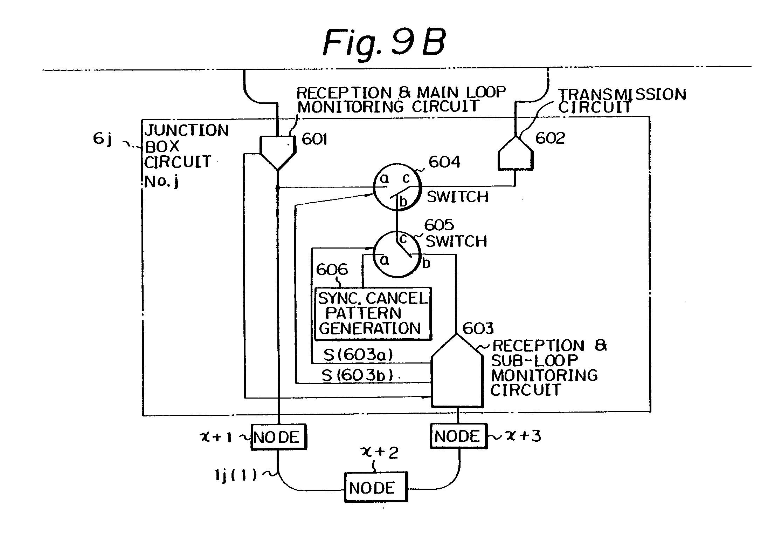

A loop transmission system with frame synchronization control according to another embodiment of the present invention is shown in Figs. 9A and 9B.

In the loop transmission system of Figs. 9A and 9B, the transmission loop consists of a main loop (ring) 100 and a plurality of sub-loops (sub-rings) 111, ..., li(1), li(2), lj(1), ..., ln(1). A supervisory device 2 is inserted in the main loop 1. A number of nodes are inserted in each of the sub-loops. Also, a node 7 is inserted in the main loop. The sub-loops are connected with the main loop through junction box circuit No. 1, (6I); ...; No. i, (6i); No. j, (6j); ...; No. n, (6n).

The receipt and transmission of information are carried out in each of the nodes inserted in the sub-loops.

The structure of the supervisory device 2 is fundamentally the same as the supervisory device in the system of Figs. 1A and 1B.

The junction box circuit 6j includes a reception and main loop monitoring portion 601, a transmission portion 602, a reception and sub-loop monitoring portion 603, switches 604 and 605, and a synchronization cancellation pattern generation portion 606.

The synchronization cancellation pattern generation portion 606 delivers a synchronization cancellation pattern signal. The reception and sub-loop monitoring circuit 603 receives the signal transmitted from the sub-loop lj(1), detects whether or not the received signal contains abnormal data, and controls the switches 604 and 605 according to a predetermined logic described later. The switch 604 carries out the switching between the taking-in of the sub-loop lj(1) to the main loop 100 and the bypassing of the sub-loop

lj(1). The switch 605 carries out the switching between the formation of the passage for the taking-in of the sub-loop lj(1) and the formation of the passage for the synchronization cancellation signal from the synchronization cancellation pattern generation portion 606 to the main loop 100.

Each of the nodes in the system of Figs. 9A and 9B includes a frame synchronization circuit. The structure of the frame synchronization circuit is fundamentally the same as the frame synchronization circuit shown in Figs. 4A and 4B for the system of Figs. 1A and 1B, except that the dummy frame synchronization detection portion 3404, the dummy frame synchronization pattern holding portion 3405, the flip-flop circuit 3412, the AND gate 3413, and the OR gate 3408 do not exist.

When a failure occurs in the node x in the sub-loop li(2) for the junction box circuit 6i, the junction box circuit 6i detects this failure. When this failure is detected, the bypassing of the sub-loop li(2) is carried out and a synchronization cancellation signal is delivered from the synchronization cancellation pattern generation portion to the main loop 100. This synchronization cancellation signal is of a unique pattern which does not usually exist on the transmission loop consisting of the main loop and the sub-loops. When the delivered synchronization cancellation signal is detected by the node x + 1, which is downstream of the node x, the frame synchronization is cancelled, the reception/transmission of data is stopped, and the detection control of the next frame synchronization signal is carried out. Then, the synchronized state is restored by detecting the frame synchronization signal next to the synchronization cancellation signal so that the reception/transmission of data takes place.

The operation of the junction box circuit in the system of Figs. 9A and 9B is described below.

In the junction box circuit 6j, as an example of the junction box circuits 61, 62, ..., 6n, a failure on the sub-loop lj(1) is detected by monitoring by the reception and main loop monitoring portion 606 and the reception and sub-loop monitoring circuit 603. According to the result of this detection and on the basis of the control signal from the reception and sub-loop monitoring circuit 603, the switches 604 and 605 are switched.

In the reception and main loop monitoring circuit 601 and the reception and sub-loop monitoring circuit 603, a data error detection portion using the parity check method and the frame check sequence method and a physical checking portion such as a clock period detection device for checking the absence of the signal are provided in addition to the frame synchronization circuit. Both the reception and main loop monitoring portion 601 and the reception and sub-loop monitoring circuit 603 carry out detection as to whether the transmitted data is in a normal state or abnormal state by detection of the continuous absence of the frame synchronization signal, by detection of the synchronization cancellation signal, or the like.

By carrying out the decision as to whether both the transmitted data regarding the reception and main loop monitoring portion 601 and the reception and sub-loop monitoring circuit 603 are normal, whether both the transmitted data regarding the reception and main loop monitoring portion 601 and the reception and sub-loop monitoring circuit 603 are abnormal, or whether the transmission data regarding the reception and main loop monitoring portion 601 is normal and the transmission data regarding the reception and sub-loop monitoring circuit 603 is abnormal, the opertions described below are carried out.

First, the case of bypassing of a sub-loop is described.

With the reception and main loop monitoring circuit 601 is in a normal state, detection by the reception and sub-loop monitoring circuit 603 of an abnormal state means that a failure has occured in the sub-loop lj(1) connected with the junction box circuit 6j.

Hence, the circuit 603 acknowledges the occurrence of failure in the sub-loop lj(1) according to the checking by the circuit 601 and the checking by the circuit 603 and controls the switch 605 to turn the movable contact c from the fixed contact b to the fixed contact a by the signal S (603a). Accordingly, the synchronization cancellation signal is delivered through the switches 605 and 604 from the synchronization cancellation pattern generation portion 606. After that, the switch 604 is controlled, by the signal S (603b) from the circuit 603, to turn the movable contact c from the fixed contact b to the fixed contact a. Thus, the frame signal transmitted with the frame period $T_0$ is transformed to an abnormal data into which a synchronization cancellation signal is inserted instead of the data on the sub-loop.

In this case, in the junction box circuits downstream, reception and main loop monitoring circuits and reception and sub-loop monitoring circuits detect the abnormal state, since the signal containing the abovementioned abnormal data is transmitted through reception and main loop monitoring circuits and reception and sub-loop monitoring circuits. However, the reception and sub-loop monitoring circuits decide that no abnormality exists in their own sub-loops, so that the above-described operation in the junction box circuit 6j does not take place in the junction box circuits downstream.

Second, the case of the taking-in of a sub-loop is described.

When the above-mentioned failure in a sub-loop is eliminated, both the reception and main loop monitoring circuit 601 and the reception and sub-loop monitoring circuit 603 are restored to the normal state. By the control signal from the circuit 603, the switch 604 is controlled to turn the movable contact c from the fixed contact a to the fixed contact b. The synchronization cancellation signal is delivered through the switches 605 and 604 from the portion 606. After that, the switch 605 is controlled to turn the movable contact c from the fixed contact a to the fixed contact b.

Accordingly, the signal, in which a portion of the signal present on the sub-loop is replaced by the synchronization cancellation signal, is inserted into the frame signal.

The overall operation of the system of Figs. 1A and 1B can be described as follows.

(1) The system is operating normally. All of the sub-loops are taken in the main loop. The frame signals are transmitted through the main loop and sub-loops with frame period $T_0$. The frame signals are supplied to the FBM 24 in the supervisory device 2. The information transmitted through the main loop and sub-loops is controlled to be a whole multiple of the frame period $T_0$ by the function of the FBM 24.

(2) An abnormality occurs in a node in the sub-loop lj(1) connected to the junction box circuit 6j. The reception and sub-loop monitoring circuit 603 detects this abnormality by, for example, the parity checking. The abnormality detection signal is not supplied from the circuit 601. The circuit 603 operates the switch 605 to enable the transmission of the synchronization cancellation signal from the portion 606. The synchronization cancellation signal is delivered to the main loop through the switch 604.

After that, the circuit 603 operates the switch 604 to close the movable contact c with the fixed contact a. Thus, the sub-loop lj(1) is bypassed.

(3) With regard to junction box circuits downstream of the junction box circuit 6j, no failures exist in the sub-loops connected with the downstream junction box circuits. Reception and sub-loop monitoring circuits connected with the downstream junction box circuits do not carry out the specific control. Nodes in the sub-loops connected with the downstream junction box circuits are once brought to the asynchronization state. Then, the next frame synchronization signal is detected. Hence, the synchronization state is restored, and the reception and transmission of data at the nodes in the sub-loops connected with the downstream junction box circuits can be carried out.

(4) The synchronization cancellation signal is received by the supervisory device 2. The received frame detection portion 27 detects this synchronization cancellation signal and stops writing of data to the FBM 24 until the detection of the next frame synchronization signal (FP), so that the synchronization cancellation signal is eliminated. Even if the data in FBM 24 becomes empty, new frames can be delivered from the frame synchronization signal generation portion 25 to the main loop.

(5) The failure in the sub-loop which has been bypassed is eliminated. The reception and sub-loop monitoring circuit 603 detects the absence of failure and controls the switch 604 to turn the movable contact c from the fixed contact a to the fixed contact b. The synchronization cancellation signal is delivered through the contact between the fixed contact a and the movable contact c from the synchronization cancellation pattern generation portion 606.

After that, the switch 605 is controlled by the circuit 603 to turn the movable contact c to close with the fixed contact b. Thus, the sub-loop lj(1) is taken into the main loop 100. An operation similar to the operation described in (3) above is carried out in the junction box circuits and node downstream of the junction box circuit 6j. An operation similar to the operation described in (4) above is carried out in the supervisory device 2, so that the synchronization cancellation signal is eliminated.

It is possible to facilitate the decision required for control by receiving the information concerning the turning-on of the power source or the turning-off of the power source from the node through separate transmission lines, instead of relying on operation of the reception and sub-loop monitoring circuit in which the state of sub-loop lj(1) is monitored by the signal on the sub-loop lj(1) as in the above-described case.

Also, it is possible to deal in the similar manner with a failure in a node on the main-loop as with a failure in a node in the sub-loop as described above.

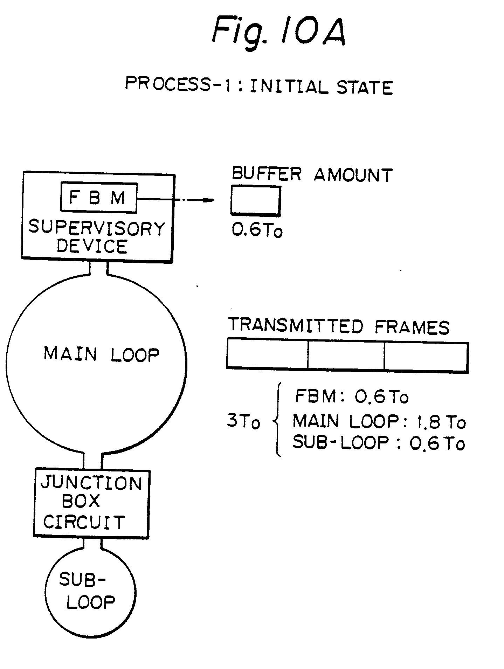

As a manner for embodying the present invention, a method for adjusting the amount of the frame buffer in a loop transmission system with frame synchronization control will be described with reference to Figs. 10A to 10H.

In this method, the frames are constituted such that a predetermined reception-only frame is provided after a bypassing of a sub-loop occurs. This reception only frame is eliminated after one circulation of this frame through the transmission loop. According to this method, the buffer amount of a frame buffer memory in the supervisory means is maintained less than one frame length.

In this method, a loop transmission system including a supervisory device and nodes is used, bypass operations are carried out by using a dummy frame generated in the supervisory device, and the dummy frame is eliminated by the supervisory device after the bypass operation is completed. When the buffer amount of a frame buffer memory in the supervisory device becomes greater than one frame length, the first frame after the completion of the above-mentioned bypassing is delivered as a reception-only frame. The delivered reception-only frame circulates through the transmission loop. After one circulation through the transmission loop, this delivered reception-only frame is eliminated. Hence, the buffer amount of the frame buffer memory in the supervisory device is adjusted not to exceed one frame length.

The processes of this method are illustrated in Figs. 10A to 10H.

In each of Figs. 10A to 10H, there is shown a model of the system including a supervisory device having an FBM, a main loop, a junction box circuit, and a sub-loop. For simplification, only one junction box circuit is shown, and nodes on the main-loop and sub-loop are not shown.

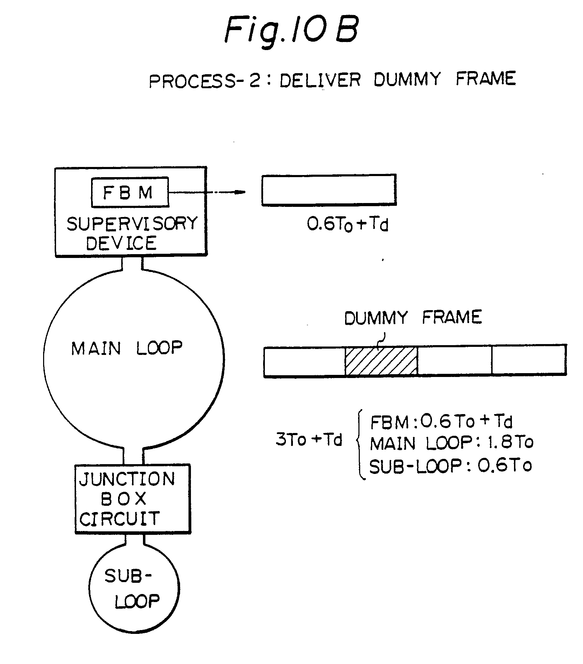

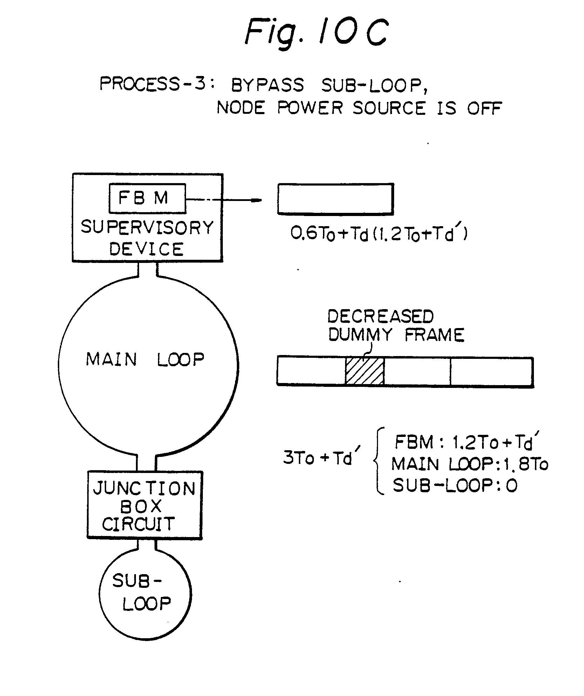

As process-1, the initial state is illustrated in Fig. 10A. As process-2, the state where a dummy frame is delivered is illustrated in Fig. 10B. As process-3, the state where a sub-loop in question is bypassed and the power source of a node in question is turned off is illustrated in Fig. 10C.

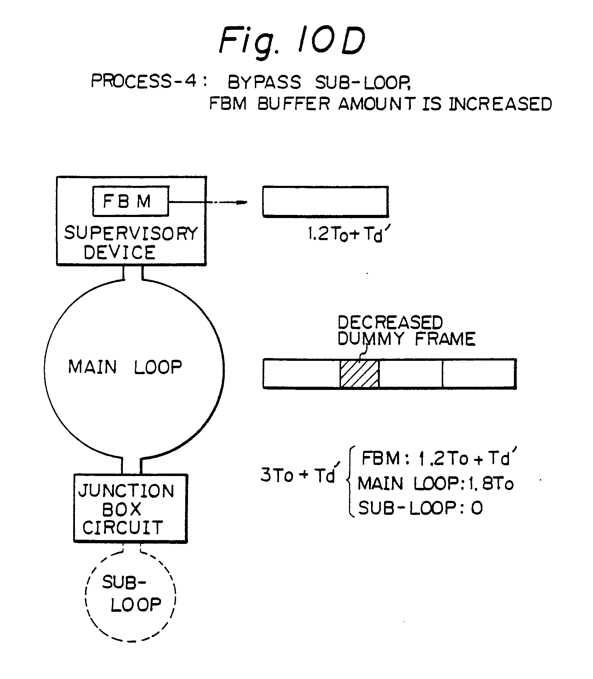

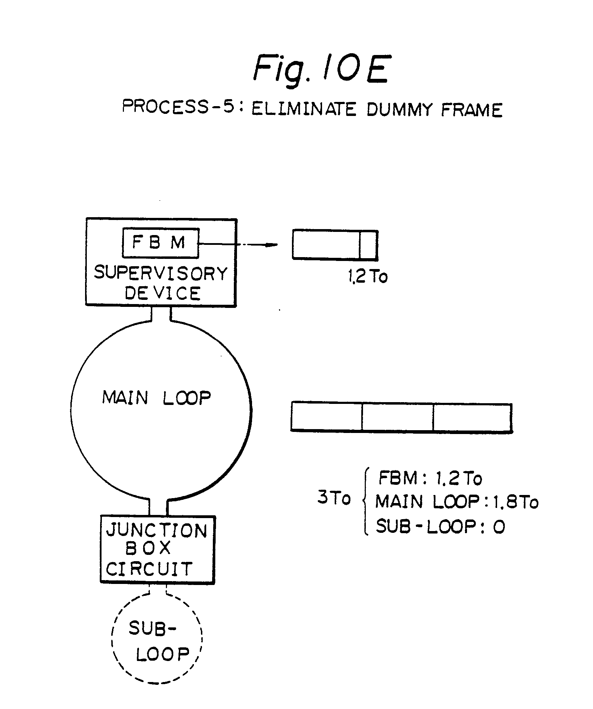

As process-4, the state where a sub-loop in question is bypassed and the buffer amount of the FBM is increased is illustrated in Fig. 10D. As process-5, the state where the dummy frame is eliminated is illustrated in Fig, 10E.

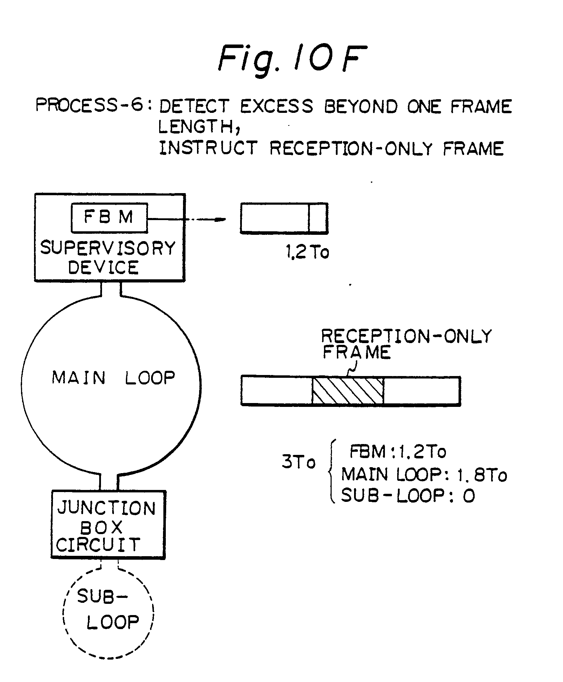

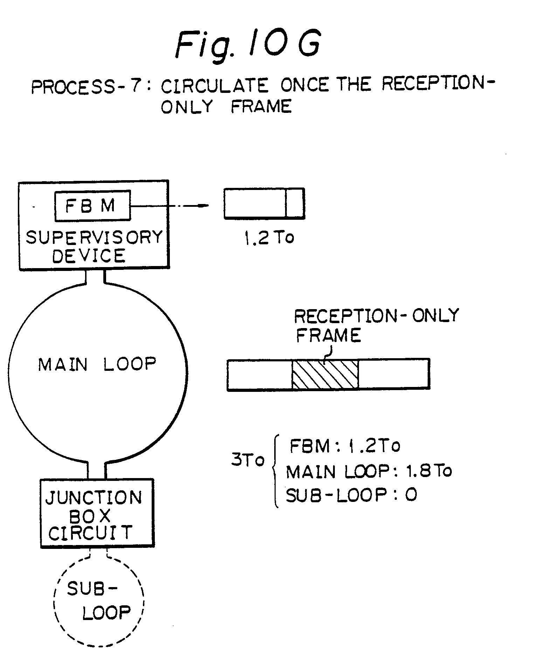

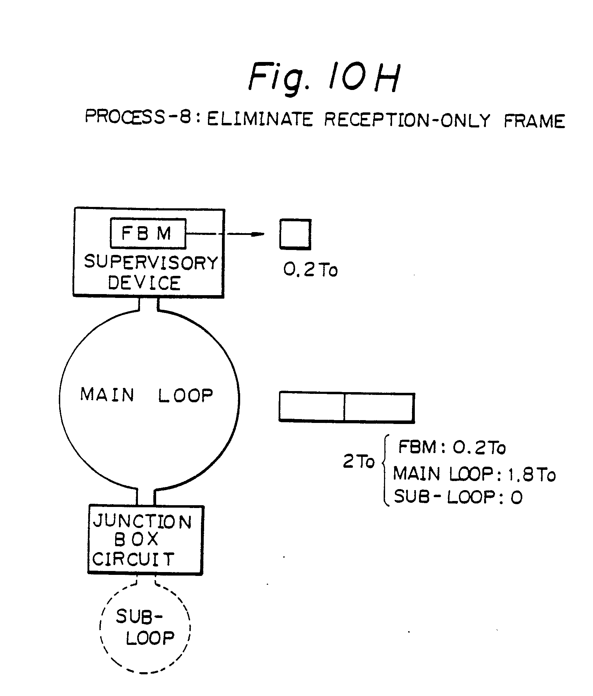

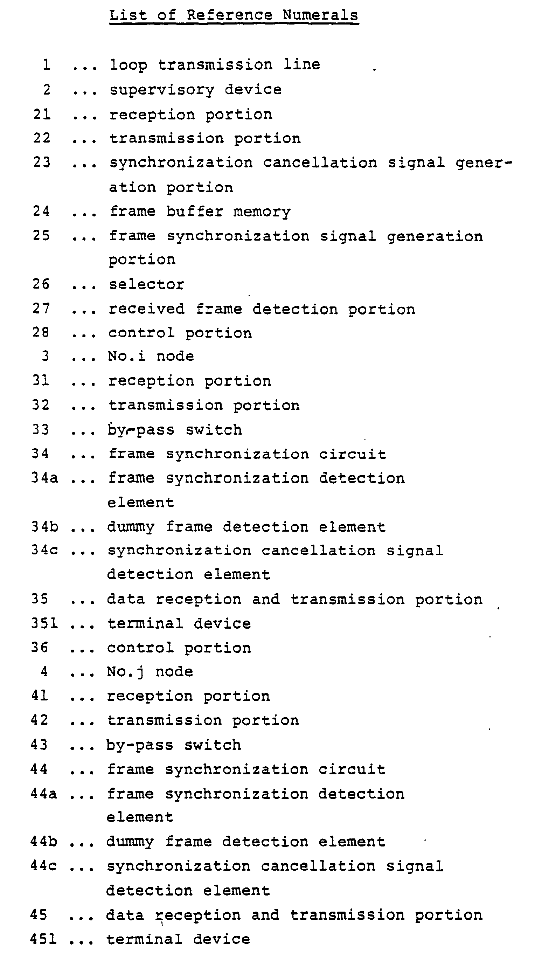

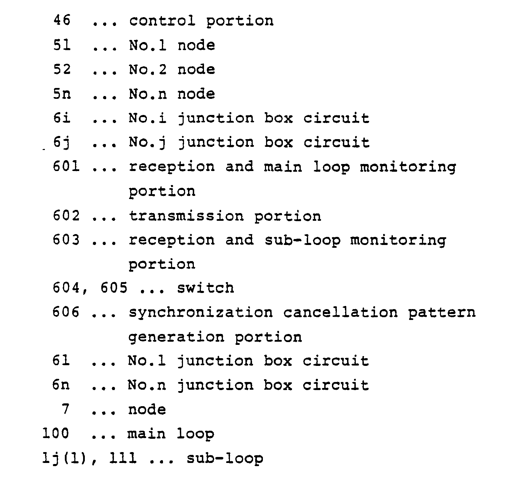

As process-6, the state where an excess beyond one frame length in the FBM is detected and the delivery of a reception-only frame is instructed is illustrated in Fig. 10F. As process-7, the state where the reception-only frame is circulated once through the transmission loop is illustrated in Fig. 10G. As process-8, the state where the reception-only frame is eliminated after the one-time circulation of the reception-only frame through the transmission loop is illustrated in Fig. 10H.

According to the manner described with reference to Figs. 10A to 10H, the buffer amount of the FBM is maintained within the range from O to one frame length, and, accordingly, the capacity of the FBM can be saved.

**Claims**

1. A loop transmission system with frame synchronization control comprising:

loop means (1) through which information in the form of a sequence of frames is transmitted,

a plurality of node means (3, 4, 5) inserted at predetermined positions in said loop means for receiving and delivering information, the node means being in a synchronized operation state when a certain number greater than one of frame synchronization signals has been detected and being in a non-synchronized operation state when a certain number greater than one of asynchronizations has been detected, and

supervisory means (2) inserted at a predetermined position in said loop means for supervising the transmission of information through said loop means in association with said node means,

characterized in that

said supervisory means are operable to deliver a frame synchronization cancellation signal and that

each of said node means are adapted to detect said frame synchronization cancellation signal and cancel the synchronized operation state, and to restore synchronization in the frame next to said synchronization cancelled frame;

whereby quick restoration of synchronization after bypassing or taking-in of a node is ensured.

2. A system according to claim 1, wherein one of said node means executes bypassing or taking-in of a node when said frame synchronization cancellation signal is detected.

3. A system according to claim 1, wherein said supervisory means (2) comprises means for delivering a synchronization cancellation signal (23).

4. A system according to claim 1, wherein at least one of said node means (3, 4, 5) is installed in a sub-loop (111) coupled with a main loop (100) of said loop means through a junction box circuit (6).

5. A system according to claim 4, wherein said junction box circuit (6) comprises means for delivering a synchronization cancellation signal (606).

6. A system according to claim 1, wherein a node is bypassed during a dummy frame signal.

7. A system according to claim 1, wherein said supervisory means (2) is operable to generate a dummy frame.

8. A system according to claim 7, wherein each of said node means has dummy frame detection means (34b, 44b).

9. A system according to claim 7, wherein said dummy frame is eliminated after one circulation through said loop means.

10. A system according to claim 1, wherein a frame signal is constituted such that a predetermined reception-only frame adapted to carry out information reception exclusively is provided after bypassing of at least one of said node means occurs and said reception-only frame is eliminated after one circulation through said loop means, whereby the frame length of the frame signal is adjusted.

11. A system according to claim 4, wherein a frame signal is constituted such that a predetermined reception-only frame adapted to carry out information reception exclusively is provided after bypassing of a sub-loop occurs and said reception-only frame is eliminated after one-circulation through said loop means, whereby the frame length of the frame signal is adjusted.

**Patentansprüche**

1. Schleifenübertragungssystem mit einer Rahmensynchronisationssteuerung, umfassend:

eine Schleifeneinrichtung (1), durch welche Information in Form einer Folge von Rahmen oder Blöcken übertragen wird,

mehrere, an vorbestimmten Positionen in die Schleifeneinrichtung eingesetzte Knoteneinrichtungen (3, 4, 5) zum Empfangen und Liefern von Information, wobei die Knoteneinrichtungen in einem synchronisierten Betriebszustand sind, wenn eine gewisse, mehr als Eins betragende Anzahl von Ramhmensynchronisationssignalen detektiert wurde, und in einem nicht-synchronisierten Betriebszustand sind, wenn eine gewisse, mehr als Eins betragende Anzahl von Asynchronistionen detektiert wurde, und

eine an einer vorbestimmten Position in die Schleifeneinrichtung eingesetzte überwachungseinrichtung (2) zum überwachen der übertragung von Information durch die-Schleifeneinrichtung in Zuordnung zu den Knoteneinrichtungen, dadurch gekennzeichnet, daß

die Überwachungseinrichtung betrieben werden kann zum Liefern eines Rahmensynchronisationslöschsignals und

jede der Knoteneinrichtungen geeignet ist, das Rahmensynchronisationslöschsignals zu detektieren und den synchronisierten Betriebszustand aufzuheben, und Synchronisation in dem Rahmen wiederherzustellen, der dem Rahmen mit der gelöschten Synchronisation am nächsten ist,

wobei eine schnelle Widerherstellung von Synchronisation nach Überbrücken oder Einbeziehen eines Knotens sichergestellt wird.

2. System nach Anspruch 1, worin eine der Knoteneinrichtungen das Umgehen oder Einbeziehen eines Knotens ausführt, wenn das Rahmensynchronistaionslöschsignal detektiert wird.

3. System nach Anspruch 1, worin die Überwachungseinrichtung (2) Mittel zum Liefern eines Rahmensynchronistaionslöschsignals (23) umfaßt.

4. System nach Anspruch 1, worin wenigstens eine der Knoteneinrichtungen (3, 4, 5) in einer Unterschleife (111) installiert ist, die mit einer Hauptschliefe (100) der Schleifenreinrichtung durch eine Verteilerschaltung (6) gekoppelt ist.

5. System nach Anspruch 4, worin die Verteilerschaltung (6) Mittel zum Liefern eines Synchronistaionslöschsignals (606) umfaßt.

6. System nach Anspruch 4, ein Knoten wähend eines Blindrahmensignals (606) überbrückt wird.

7. System nach Anspruch 1, worin die Überwachungseinrichtung (2) betrieben werden kann, um ein Blindrahmen zu erzeugen.

8. System nach Anspruch 7, worin jede der Knoteneinrichtungen Mittel (34b, 44b) zurm Detektieren von Blindrahmen aufweist.

9. System nach Anspruch 7, worin der Blindrahmen nach einem Durchlauf durch die Schleifeneinrichtung eliminiert wird.

10. System nach Anspruch 1, worin ein Rahmensignal so ausgebildet ist, daß ein vorbestimmter Nur-Empfangs-Rahmen, der zur Ausführung ausschließlich von Informationsempfang geeignet ist, gebildet wird, nachdem die Überbrückung von wenigstens einer der Knoteneinrichtungen stattgefunden hat, und der Nur-Empfangs-Rahmen nach einem Durchlauf durch die Schleifeneinrichtung eliminiert wird, wobei die Rahmenlänge des Rahmensignals eingestellt wird.

11. System nach Anspruch 4, worin ein Rahmensignal so ausgebildet ist, daß ein vorbestimmter Nur-Empfangs-Rahmen, der zur Ausführung ausschließlich von Informationsempfang geeignet ist, gebildet wird, nachdem die Überbrückung einer Unterschleife stattgefunden hat, und der Nur-Empfangs-Rahmen nach einem Durchlauf durch die Schleifeneinrichtung eliminiert wird, wobei die Rahmenlänge des Rahmensignals eingestellt wird.

**Revendications**

1. Système de transmission en boucle à commande de synchronisation des blocs comprenant:

un moyen en boucle (1) par lequel sont transmises des informations sous la forme d'une série de blocs,

un ensemble de moyens à noeud (3, 4, 5) insérés à des positions prédéterminées dans le moyen en boucle pour recevoir et délivrer des informations, les moyens à noeud étant dans un état de fonctionnement synchronisé quand un certain nombre supérieur à un des signaux de synchronisation de bloc a été détecté et étant dans un état de fonctionnement non synchronisé quand un certain nombre supérieur à un des états d'asynchronisation a été détecté, et

un moyen de surveillance (2) inséré à une position prédéterminée dans le moyen en boucle pour surveiller la transmission des informations par le moyen en boucle en association avec les moyens à noeud, caractérisé en ce que

le moyen de surveillance peut être mis en fonctionnement pour délivrer un signal de suppression de synchronisation de bloc et en ce que

chacun des moyens à noeud est agencé pour détecter le signal de suppression de synchronisation de bloc et supprimer l'état de fonctionnement synchronisé, et pour rétablir la synchronisation dans le bloc suivant le bloc à synchronisation supprimée;

le rétablissement rapide de la synchronisation étant ainsi garanti après le contournement de ou le passage dans un noeud.

2. Système selon la revendication 1, dans lequel un des moyens à noeud exécute un contournement de ou un passage dans un noeud quand le signal de suppression de synchronisation de bloc est détecté.

3. Système selon la revendication 1, dans lequel le moyen de surveillance (2) comprend un moyen pour délivrer un signal de suppression de synchronisation (23).

4. Système selon la revendication 1, dans lequel au moins un des moyens à noeud (3, 4, 5) est mis en place dans une sous-boucle (111) couplée à une boucle principale (100) du moyen en boucle par l'intermédiaire d'un circuit à boîte de jonction (6).

5. Système selon la revendication 4, dans lequel le circuit à boîte de jonction (6) comprend un moyen pour délivrer un signal de suppression de synchronisation (606).

6. Système selon la revendication 1, dans lequel un noeud est contourné pendant la présence d'un signal de bloc fictif.

7. Système selon la revendication 1, dans lequel le moyen de surveillance (2) peut être mis en fonctionnement pour générer un bloc fictif.

8. Système selon la revendication 7, dans lequel chacun des moyens à noeud comporte un moyen de détection de bloc fictif (34b, 44b).

9. Système selon la revendication 7, dans lequel le bloc fictif est éliminé après une circulation dans le moyen en boucle.

10. Système selon la revendication 1, dans lequel un signal de bloc est constitué de telle sorte qu'un bloc de réception uniquement prédéterminé et adapté pour exécuter une réception d'informations exclusivement est fourni après qu'un contournement d'au moins un des moyens à noeud se produise et le bloc de réception uniquement est éliminé après une circulation dans le moyen en boucle, la longueur de bloc du signal de bloc étant ainsi réglée.

11. Système selon la revendication 4, dans lequel un signal de bloc est constitué de telle sorte qu'un bloc de réception uniquement prédéterminé et adapté pour exécuter une réception d'informations exclusivement est fourni après qu'un contournement d'une sous-boucle se produise et le bloc de réception uniquement est éliminé après une circulation dans le moyen en boucle, la longueur de bloc du signal de bloc étant ainsi réglée.

*Fig. IA*

SUPERVISORY DEVICE

SYNCHRONIZATION CANCELLATION SIGNAL GENERATION PORTION ~23

FRAME SYNCHRONIZ. SIGNAL GENERATION PORTION ~25

CONTROL PORTION ~28

FRAME BUFFER MEMORY ~24

~2

26~ SELECTOR

RECEIVED FRAME DETECTION PORTION ~27

TRANSMISSION PORTION ~22

21~ RECEPTION PORTION

51

1

5n

NODE No.1

52~

NODE No.2

NODE No.n

Fig.1

Fig.1A

Fig.1B

EP 0 219 549 B1

## Fig. IB

EP 0 219 549 B1

EP 0 219 549 B1

# Fig. 2

FP: FRAME SYNCHRONIZATION SIGNAL

FP(D): DUMMY FRAME SYNCHRONIZATION SIGNAL

S (SC): SYNCHRONIZATION CANCELLATION SIGNAL

# Fig. 3

*Fig. 4A*

Fig. 4

| Fig.4A | Fig.4B |
|--------|--------|

34

RECEIVED SIGNAL →

3401
SHIFT REGISTER

3402
FRAME SYNC. SIGNAL DETECTION

3403
FRAME SYNC. PATTERN HOLDING

3408

3404
DUMMY FRAME DETECTION

3405
DUMMY FRAME SYNC. PATTERN HOLDING

3412
FLIP-FLOP CIRCUIT

3406
SYNC. CANCELLATION SIGNAL DETECTION

3407
SYNC. CANCELLATION PATTERN HOLDING

5

Fig. 4B

# Fig. 5

S(31)

| FP | DATA (d₁) | FP | DATA(d₂) | FP(D) S(32) | DUMMY DATA | FP | DATA (d₃) | FP | DATA (d₄) | FP | DATA(d₅) |

DETECTION OF THE NEXT
SYNCHRONIZATION SIGNAL

RESTORATION OF
SYNCHRONIZATION

FAILURE OF
SYNCHRONIZATION

EP 0 219 549 B1

# Fig. 6A

LENGTH ADJUSTMENT SIGNAL
FROM FBM IN SUPERVISORY DEVICE

NODE 3
(BEING BYPASSED)

# Fig. 6B

TO BE DELIVERED IN NORMAL
OPERATION

FP | FRAME-B

FR|DS|SC|DUMMY DATA|FP| FRAME-B

FRAME-A

FRAME-B

FP

FRAME-B

SIGNAL FROM
NODE 4

NODE 3
(BEING BYPASSED)

# Fig. 6 C

FP | FRAME-B | FP | FRAME-C

FRAME-C

DUMMY DATA

FP(2)(SC)

FRAME-A

FP

SIGNAL FROM NODE 4

NODE 3
(BEING BYPASSED)

# Fig. 6 D

## Fig. 6E

# Fig. 6 F

# Fig. 6 G

# Fig. 7

## OPERATION OF A NODE

```
                    ┌──────────────────────┐
                    │ INSTRUCTION BY       │
                    │ OPERATOR             │
                    │ TAKE-IN OR  BYPASS   │
                    └──────────┬───────────┘
                               │
              ┌────────────────┤
         NO   │         ◇ DUMMY FRAME
        ◄─────┤         DETECTED
              │              ?
              │              │ YES
              │              │
         ┌────┤
         NO   │      SYNC.
        ◄─────┤   CANCELLATION
         │    │   SIGNAL PASSED
         │    │        ?
         │    │        │ YES
         │    │        │
         │         TAKE-IN                BYPASS
         │           OR         ───────────────────┐
         │         BYPASS ?                         │
         │            │ TAKE-IN                     │
         │    ┌───────┴──────────┐        ┌─────────┴────────┐
         │    │ STOP BY-PASSING  │        │ NODE  BYPASSING  │
         │    │       OR         │        └─────────┬────────┘
         │    │ NODE  BYPASSING  │                  │
         │    └───────┬──────────┘                  │
         │    ┌───────┤                             │
         NO   │     SYNC.                     ╭──────┴──────╮
        ◄─────┤     SIGNAL                    │    E N D    │
              │   DETECTED                    ╰─────────────╯
              │        ?
              │        │ YES
              │  ╭─────┴─────────╮
              │  │ OPERATION STATE│
                 ╰───────────────╯
```

# Fig. 8A

OPERATION OF
SUPERVISORY DEVICE
(TRANSMISSION SIDE )

PROCESS OF
TAKING- IN OR
BYPASSING

TAKE-IN/BYPASS
INSTRUCTION
RECEIVED
? — YES

NO

TIME-OUT
OF
TAKING- IN
TIMER ? — YES

NO

OPERATOR'S
INSTRUCTION
ISSUED
? — YES

NO

SYNC.
SIGNAL
AT BEGINNING OF
FBM ? — NO

YES

DELIVER
DUMMY FRAME,
STOP
DELIVERY FROM FBM

DELIVERY
OF DUMMY FRAME
COMPLETED
? — NO

YES

RESTART
FBM DELIVERY

NORMAL STATE

Fig. 8B

OPERATION OF SUPERVISORY DEVICE (RECEPTION SIDE)

*Fig. 9A*

SUPERVISORY DEVICE

SYNCHRONIZATION CANCELLATION SIGNAL GENERATING PORTION ~23

FRAME SYNCHRONIZ SIGNAL GENERATION PORTION ~25

CONTROL PORTION 28

2

FRAME BUFFER MEMORY 24

26~ SELECTOR

RECEIVED FRAME DETECTION PORTION ~27

22~ TRANSMISSION PORTION

21 RECEPTION PORTION

111

100

NODE

NODE

NODE

JUNCTION BOX CIRCUIT No.1 ~61

NODE 7

6n

NODE 1n(1)

NODE

JUNCTION BOX CIRCUIT No.n

NODE

NODE

NODE 1i(1)

NODE

6i

NODE

JUNCTION BOX CIRCUIT No.i

NODE

NODE 1i(2)

χ

Fig. 9
Fig.9A
Fig.9B

EP 0 219 549 B1

# Fig. 9 B

RECEPTION & MAIN LOOP
MONITORING CIRCUIT

TRANSMISSION
CIRCUIT

6j ～ JUNCTION
BOX
CIRCUIT
No. j

601

604

SWITCH

602

605
SWITCH

606

SYNC. CANCEL
PATTERN
GENERATION

S (603a)

S (603b)

603

RECEPTION &
SUB-LOOP
MONITORING
CIRCUIT

$x+1$ ～ NODE          NODE ～ $x+3$

$x+2$

1j(1) ～

NODE

# Fig. 10A

## PROCESS-1 : INITIAL STATE

BUFFER AMOUNT

$0.6T_0$

TRANSMITTED FRAMES

$3T_0$ $\begin{cases} \text{FBM: } 0.6\,T_0 \\ \text{MAIN LOOP: } 1.8\,T_0 \\ \text{SUB-LOOP : } 0.6\,T_0 \end{cases}$

(Diagram: SUPERVISORY DEVICE containing FBM, connected to MAIN LOOP, connected to JUNCTION BOX CIRCUIT, connected to SUB-LOOP)

# Fig.10 B

## PROCESS-2: DELIVER DUMMY FRAME

$0.6T_0 + T_d$

DUMMY FRAME

$3T_o + T_d$ $\begin{cases} \text{FBM}: 0.6\,T_o + T_d \\ \text{MAIN LOOP}: 1.8\,T_o \\ \text{SUB-LOOP}: 0.6\,T_o \end{cases}$

# Fig. 10 C

PROCESS-3: BYPASS SUB-LOOP,
NODE POWER SOURCE IS OFF

$0.6T_0 + T_d (1.2T_0 + T_d')$

DECREASED
DUMMY FRAME

$3T_0 + T_d'$ $\begin{cases} \text{FBM}: 1.2T_0 + T_d' \\ \text{MAIN LOOP}: 1.8T_0 \\ \text{SUB-LOOP}: 0 \end{cases}$

# Fig. 10D

PROCESS-4 : BYPASS SUB-LOOP,
FBM BUFFER AMOUNT IS INCREASED

$3To + Td'$ $\begin{cases} FBM : 1.2To + Td' \\ MAIN\ LOOP : 1.8To \\ SUB-LOOP : 0 \end{cases}$

# Fig. 10 E

PROCESS-5: ELIMINATE DUMMY FRAME

1,2 To

$$3 To \begin{cases} FBM: 1,2 To \\ MAIN\ LOOP: 1,8 To \\ SUB-LOOP: 0 \end{cases}$$

# Fig. 10 F

PROCESS-6 : DETECT EXCESS BEYOND ONE FRAME
LENGTH,
INSTRUCT RECEPTION-ONLY FRAME

# Fig. 10 G

## PROCESS-7: CIRCULATE ONCE THE RECEPTION-ONLY FRAME

FBM

SUPERVISORY DEVICE

1.2 To

MAIN LOOP

RECEPTION-ONLY FRAME

JUNCTION BOX CIRCUIT

SUB-LOOP

3To { FBM: 1.2To
MAIN LOOP: 1.8To
SUB-LOOP: O

26

# Fig. 10 H

PROCESS-8: ELIMINATE RECEPTION-ONLY FRAME

## List of Reference Numerals

 1  ... loop transmission line

 2  ... supervisory device

21  ... reception portion

22  ... transmission portion

23  ... synchronization cancellation signal generation portion

24  ... frame buffer memory

25  ... frame synchronization signal generation portion

26  ... selector

27  ... received frame detection portion

28  ... control portion

 3  ... No.i node

31  ... reception portion

32  ... transmission portion

33  ... by-pass switch

34  ... frame synchronization circuit

34a ... frame synchronization detection element

34b ... dummy frame detection element

34c ... synchronization cancellation signal detection element

35  ... data reception and transmission portion

351 ... terminal device

36  ... control portion

 4  ... No.j node

41  ... reception portion

42  ... transmission portion

43  ... by-pass switch

44  ... frame synchronization circuit

44a ... frame synchronization detection element

44b ... dummy frame detection element

44c ... synchronization cancellation signal detection element

45  ... data reception and transmission portion

451 ... terminal device

```
 46  ... control portion
 51  ... No.1 node
 52  ... No.2 node
 5n  ... No.n node
 6i  ... No.i junction box circuit
 6j  ... No.j junction box circuit
601  ... reception and main loop monitoring
         portion
602  ... transmission portion
603  ... reception and sub-loop monitoring
         portion
604, 605 ... switch
606  ... synchronization cancellation pattern
         generation portion
 61  ... No.1 junction box circuit
 6n  ... No.n junction box circuit
  7  ... node
100  ... main loop
1j(1), 111 ... sub-loop
```